**Europäisches Patentamt**

**European Patent Office**

**Office européen des brevets**

(19)

(11) Numéro de publication : **0 490 734 A1**

## (12) DEMANDE DE BREVET EUROPEEN

(21) Numéro de dépôt : **91403299.0**

(22) Date de dépôt : **06.12.91**

(51) Int. Cl.⁵ : **B60R 1/06,** G05B 19/405, H01Q 3/08

(30) Priorité : **07.12.90 FR 9015343**

(43) Date de publication de la demande :
**17.06.92 Bulletin 92/25**

(84) Etats contractants désignés :
**DE ES GB**

(71) Demandeur : **REGIE NATIONALE DES USINES RENAULT S.A.**
**34, Quai du Point du Jour**
**F-92109 Boulogne Billancourt (FR)**

(72) Inventeur : **Masurier, Gérard**
**28 Bis, rue de l'Oise, La Bonneville**
**F-95540 Mery-sur-Oise (FR)**
Inventeur : **Navarette, Jérôme**
**1, Avenue du Pré d'Orient**
**F-78170 La-Celle-Saint-Cloud (FR)**

(54) **Procédé et dispositif de positionnement automatique d'une surface réfléchissante.**

(57) Procédé de positionnement automatique avec rappel de mémoire d'une surface réfléchissante (4) montée sur une rotule (22, 23) autorisant avec la même amplitude son déplacement angulaire par rapport à une position centrale, autour d'un premier axe de pivotement haut-bas (24) et d'un second axe de pivotement gauche-droite (25), caractérisé en ce que la surface réfléchissante (4) est couplée à des capteurs de position haut-bas et gauche-droite (8, 12), dont les tensions de sortie sont exploitées en vue d'imposer une trajectoire à un point de référence M, fixe par rapport à la surface réfléchissante (4), lors du positionnement automatique de celle-ci dans une position cible C, rappelée en mémoire.

FIG.1

EP 0 490 734 A1

L'invention concerne un procédé et un dispositif à action automatique permettant de replacer une surface réfléchissante telle qu'une glace de rétroviseur dans une position préalablement mémorisée.

La publication FR 2.509.675 décrit un rétroviseur mémorisé, dont le support du miroir est monté sur un socle et peut pivoter autour de deux axes indépendants. Ce support est couplé aux arbres de deux moteurs de réglage commandés électriquement, et pouvant être alimentés sélectivement. Au moins une position nominale réglable du support, par rapport aux deux axes, est mémorisée sous la commande du conducteur. Un retour dans la position mémorisée est possible par la lecture des informations de position mémorisées, et la commande appropriée des moteurs de réglage.

Ce type de dispositif, bien que satisfaisant sur de nombreux plans présente toutefois un inconvénient majeur. En effet, pour déplacer le rétroviseur d'une position de départ à une position cible rappelée en mémoire, en actionnant successivement les deux moteurs de réglage, il existe deux trajectoires possibles, selon l'ordre d'actionnement des moteurs. Il n'est pas rare que l'une de ces deux trajectoires sorte de l'ensemble des positions permises au rétroviseur par son système d'articulation. De fait, si l'ordre d'actionnement des moteurs est imposé par la logique de commande, le rétroviseur ne pourra pas rejoindre la position rappelée en mémoire, dans le cas où la trajectoire imposée sort de l'ensemble des positions autorisées.

Pour pallier à cet inconvénient, l'invention propose un procédé et un dispositif supprimant tout risque de blocage. Elle trouve notamment son application sur un rétroviseur extérieur de véhicule automobile ; toutefois, cette application ne limite pas la portée de l'invention, qui peut être mise en oeuvre sur d'autres types de surfaces fonctionnelles articulées autour de deux axes.

L'invention concerne un procédé de positionnement automatique, avec rappel de mémoire, d'une surface réfléchissante montée sur une rotule autorisant avec la même amplitude son déplacement angulaire par rapport à une position centrale autour d'un premier axe de pivotement haut-bas, et autour d'un second axe de pivotement gauche-droite. Ce procédé est caractérisé en ce que la surface réfléchissante est couplée à des capteurs de position haut-bas et gauche-droite, dont les tensions de sortie sont exploitées afin d'imposer sa trajectoire à un point de référence fixe par rapport à la surface réfléchissante, lors du positionnement automatique de celle-ci dans une position cible rappelée en mémoire.

Selon un mode de réalisation de l'invention, le point de référence se déplace de façon rectiligne lors du déplacement angulaire de la surface réfléchissante autour du premier axe et lors de son déplacement autour du second axe, si bien qu'il peut rejoindre géométriquement la position cible par deux points de passage différents, définissant avec le point de départ et cette position cible, un rectangle.

Selon un mode de réalisation de l'invention, les coordonnées des deux points de passage possibles sont calculées à partir des coordonnées de la position cible et de la position de départ du point de référence.

Selon un mode de réalisation de l'invention, le point de référence est situé sur la normale au centre de la surface réfléchissante, et peut se déplacer à l'intérieur d'un cercle délimitant l'ensemble des positions de la surface réfléchissante autorisées par la rotule.

Selon un mode de réalisation de l'invention, la trajectoire imposée à la surface réfléchissante correspond au point de passage le plus proche du centre du cercle.

Selon un mode de réalisation de l'invention, si le point de passage le plus proche du centre du cercle a la même coordonnée haut-bas que le point de départ, la surface réfléchissante est déplacée en premier lieu autour de l'axe de pivotement droite-gauche jusqu'à ce que le point de référence atteigne la coordonnée droite-gauche de la position cible.

Selon un mode de réalisation de l'invention, si le point de passage le plus proche du centre du cercle n'a pas la même coordonnée haut-bas que le point de départ, la surface réfléchissante est déplacée en premier lieu autour de l'axe de pivotement haut-bas jusqu'à ce que le point de référence atteigne la coordonnée haut-bas de la position cible.

L'invention concerne également un dispositif de positionnement automatique avec rappel de mémoire d'une surface réfléchissante montée sur une rotule autorisant avec la même amplitude son déplacement autour de deux axes orthogonaux. Ce dispositif comporte un premier moteur entraînant par l'intermédiaire d'un premier pignon une première crémaillère dont le déplacement longitudinal fait tourner la surface réfléchissante autour du premier axe, et un second moteur entraînant, par l'intermédiaire d'un second pignon une seconde crémaillère dont le déplacement longitudinal fait tourner la surface réfléchissante autour du second axe. Il comporte également un premier capteur de position déterminant la position de la surface réfléchissante autour du premier axe et un second capteur de position déterminant la position de la surface réfléchissante autour du second axe. Ce dispositif est caractérisé en ce que les tensions de sortie du premier et du second capteur sont exploitées pour déterminer quel moteur doit être actionné en premier, lors du positionnement automatique de la surface réfléchissante vers une position rappelée en mémoire.

Selon un mode de réalisation de l'invention, la première et la seconde crémaillère sont parallèles, chacune étant orthogonale à l'axe autour duquel elle fait tourner la surface réfléchissante, et portent à l'une de leurs extrémités une tête d'articulation sphérique sur laquelle est engagée par clipsage une calotte solidaire de la surface réfléchissante.

Selon un mode de réalisation de l'invention, le premier et le second capteur sont branchés sur une unité d'acquisition de valeurs de paramètres, et délivrent des signaux à la mémoire de position de l'unité centrale, des boutons de manoeuvre, des boutons de mémorisation et des boutons de rappel de mémoire fournissent des instructions à l'unité centrale, l'unité centrale délivre à un bloc de commande en puissance des signaux d'excitation du premier et du second moteur, pour effectuer le positionnement de la surface réfléchissante autour du premier et du second axe dans un ordre déterminé.

Selon un mode de réalisation de l'invention, la surface réfléchissante est un miroir de rétroviseur.

D'autres caractéristiques et avantages de l'invention apparaitront à la lecture de la description suivante d'un mode de réalisaltion de l'invention, en liaison avec les dessins annexés sur lesquels :

– la figure 1 est une vue de face du rétroviseur sur son support, laissant apparaitre en transparence derrière la surface de la glace, les moteurs de positionnement du rétroviseur,

– la figure 2 représente un moteur de positionnement,

– la figure 3 est une coupe selon III - III de la figure 1,

– la figure 4 se rapporte aux coordonnées de position d'un point de référence de la surface réfléchissante,

– la figure 5 est un schéma fonctionnel des organes de commande du dispositif.

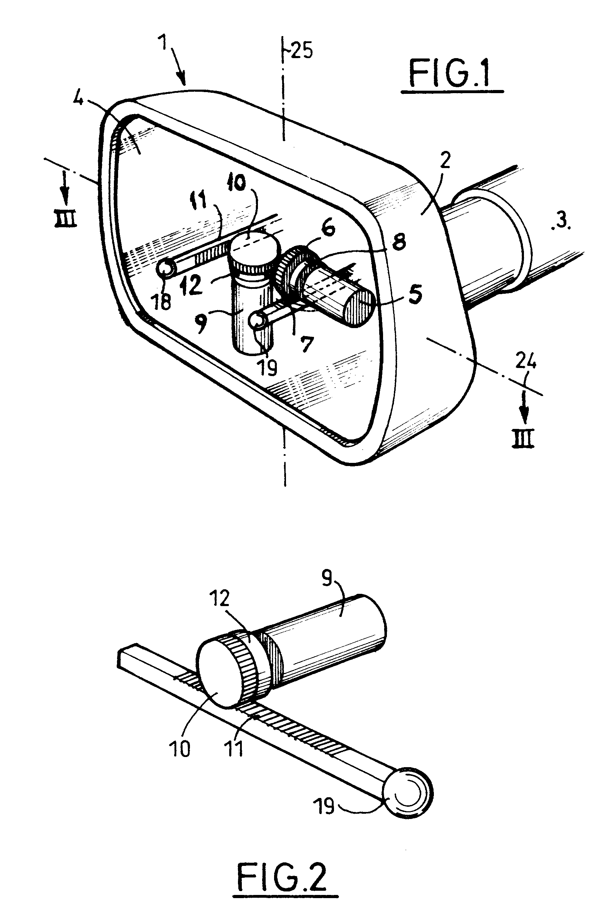

Le rétroviseur représenté sur la figure 1 comporte un support 2 articulé sur un socle 3 et une surface réfléchissante ou miroir 4. Derrière la surface réfléchissante 4 sont logés la rotule d'articulation 22, 23, un premier moteur 5, responsable du positionnement haut-bas de la surface réfléchissante 4, un premier pignon 6 entrainé par le premier moteur 5, et la première crémaillère 7 correspondante sur laquelle est en prise le premier pignon 6, un premier capteur de position 8 ou capteur de position haut-bas, étant associé au premier moteur 5. Le second moteur 9, responsable du positionnement gauche-droite de la surface réfléchissante 4 est muni d'un second pignon de sortie 10, en prise sur une seconde crémaillère 11. Le second moteur 9 est associé à un second capteur de position 12, ou capteur de position gauche-droite 12 de la surface réfléchissante 4.

Un ensemble de cables de liaison électrique non représenté relie respectivement le premier moteur 5, le premier capteur 8, le second moteur 9, et le second capteur 12 à l'unité centrale de commande du dispositif 17, embarquée sur le véhicule.

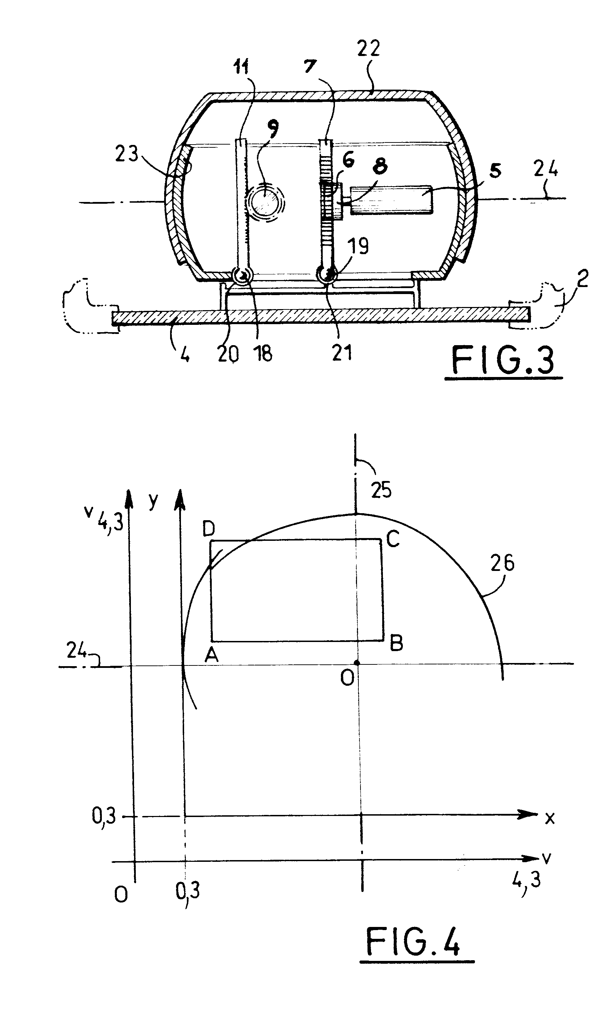

Les figures 2 et 3 montrent que chaque crémaillère 7-11 est pourvue à une de ses extrémités d'une tête sphérique 18-19 sur laquelle est engagée par clipsage une calotte 20-21 solidaire de la surface réfléchissante 4. La structure de la rotule 22, 23 est mise en évidence sur la figure 3, où on voit également que les dentures de la première et de la seconde crémaillère 7- 11 sont perpendiculaires l'une à l'autre.

Sous l'action du premier et du second moteur 5-9 la rotule 22, 23 permet grâce au défilement des crémaillères 7-11 devant les pignons 6-10, le pivotement de la surface réfléchissante 4 autour de deux axes orthogonaux 24-25 appelés respectivement axe de pivotement haut-bas 24, et axe de pivotement gauche-droite 25.

Le pivotement de la surface réfléchissante 4 est déterminé par la structure de la rotule 22, 23 et la longueur des crémaillères 7-11. De façon classique, les possibilités de débattement haut-bas de la surface réfléchissante 4 sont d'autant plus limitées qu'on se rapproche des positions extrêmes tout à gauche ou tout à droite.

De même, les possibilités de débattement gauche-droite sont d'autant plus limitées qu'on se rapproche des positions extrêmes tout en haut ou tout en bas. La surface réfléchissante 4 a en fait la possibilité de se déplacer entre ces quatre positions extrêmes. Si on considère la normale au plan de la surface réfléchissante en son centre, tout point de cette droite, y compris son point d'intersection avec le plan, évolue à l'intérieur d'un cercle 26 centré sur la position O de ce point M qui correspond à la position centrale de la surface 4, vis-à-vis des deux axes de positionnement 24-25. Soit M un point de référence choisi arbitrairement sur la normale.

Le cercle 26 est représenté sur la figure 4 dans un repère orthonormé. L'abcisse x et l'ordonnée y de chaque point M placé dans ce repère représentent les coordonnées de position du point de référence M autour des deux axes de pivotement 24-25. Sur l'axe horizontal 24, on lit la coordonnée x de position gauche-droite du point de référence M, et sur l'axe vertical 25 on lit sa coordonnée y de position haut-bas.

La figure 4 met en évidence que pour déplacer le point de référence M d'une position de départ A à une position d'arrivée ou position cible C, non située sur une ligne parallèle à l'axe horizontal 24 ou à l'axe vertical 25, il existe deux trajectoires possibles. Chacune de ces trajectoires est constituée de deux segments orthogonaux correspondants à l'actionnement respectif de chaque moteur. Elles forment ensemble un rectangle (A - B - C - D). A la lecture de ce schéma on s'aperçoit que certaines trajectoires sont impossibles à effectuer, parce qu'elles sortent de l'ensemble des positions autorisées au point de référence M, délimité par le cercle 26.

Ceci signifie que, pour certains réglages mémorisés, le choix arbitraire de l'ordre d'actionnement des moteurs peut conduire un blocage : dans ce cas, le point de référence M ne peut rejoindre la position cible C rappelée en mémoire, et il en résulte un mauvais réglage, dont le conducteur ne sera pas satisfait.

Le rectangle ayant pour sommet le point de départ A, les deux points de ,passage théoriques B, D, et la position cible C met en évidence que, lorsqu'une première trajectoire est impossible car elle sort du cercle des positions autorisées, la seconde trajectoire, par contre est possible. L'invention propose une stratégie de commande permettant à la surface réfléchissante 4, de s'engager toujours sur une trajectoire possible. Cette stratégie est la suivante :

- Si le point de passage le plus proche du centre du cercle a la même coordonnée haut-bas y que le point de départ A, la surface réfléchissante 4 est déplacée en premier lieu autour de l'axe de pivotement gauche-droite 25,

- Si le point de passage le plus proche du centre du cercle a la même coordonnée x gauche-droite que le point de départ, la surface réfléchissante est déplacée en premier lieu autour de l'axe de pivotement haut-bas 24.

Ainsi, en choisissant judicieusement quel moteur 5, 9 doit être actionné en premier, tous les réglages autorisés par la structure géométrique de la rotule 23, et mémorisés, peuvent être effectués, quelque soit la position de départ.

Cette stratégie, développée pour des miroirs de rétroviseurs, peut être appliquée à d'autres systèmes articulés sur une rotule tels qu'une antenne parabolique. Les calculs sur lesquels elle repose sont explicités en annexe.

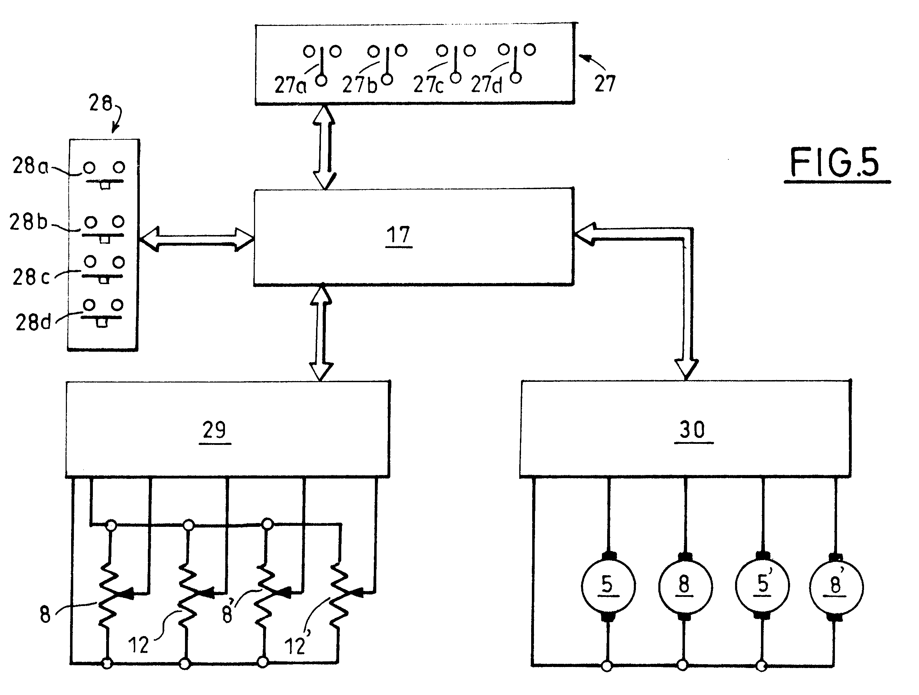

L'ensemble de commande représenté sur la figure 5 comporte une unité centrale 17 munie d'un microprocesseur, à laquelle sont reliés un bloc de commande manuelle 27, un bloc de mémorisation 28, un bloc d'acquisition des informations 29 de position, et un bloc de commande en puissance 30.

Le bloc de commande manuelle 27 présente :
– une touche de commande haut-bas du rétroviseur conducteur 27a,
– une touche de commande gauche-droite du rétroviseur conducteur 27b,
– une touche de commande haut-bas du rétroviseur passager 27c
– une touche de commande gauche-droite du rétroviseur passager 27d.

Le bloc de mémorisation présente une touche de mémorisation 28a, et plusieurs touches de rappel de mémoire, par exemple trois, 28b, 28c, 28d.

Le bloc d'acquisition d'informations 29 de position reçoit les informations émises par les capteurs de position haut-bas et droite-gauche du rétroviseur conducteur 8, 12, et du rétroviseur passager 8′, 12′.

Enfin le bloc de commande en puissance 30 envoie des ordres aux moteurs d'actionnement haut-bas et droite-gauche du rétroviseur conducteur 5, 9 et du rétroviseur passager 5′, 9′.

Annexe : Calculs déterminant la stratégie du déplacement de la surface réfléchissante.

Soient $x_o$ et $y_o$ les coordonnées du point O, centre d'articulation de la surface réfléchissante, apparaissant sur la figure 4. Le choix de la trajectoire adoptée par le point de référence M (x, y) pour passer d'une position de départ A $(x_1, y_1)$ à une position d'arrivée B $(x_2, y_2)$ nécessite les calculs suivants :

1) Déterminer pour le point de départ A, son écart par rapport à la position centrale, dans le sens horizontal puis dans le sens vertical.
a) Ecart horizontal
$$EH_1 = \mid x_1 - x_0 \mid$$
b) Ecart vertical
$$EV_1 = \mid y_1 - y_0 \mid$$
2) Déterminer pour le point d'arrivée B, son écart par rapport à la position centrale, dans le sens horizontal puis dans le sens vertical.
a) Ecart horizonrtal
$$EH_2 = \mid x_2 - x_0 \mid$$
b) Ecart vertical
$$EV_2 = \mid y_2 - y_0 \mid$$
3) Les résultats des calculs précédents nous permettent de déterminer les coordonées des deux points de passage possibles, et de là leur distance par rapport au "centre d'articulation".

$$D_1 = (EH_1)^2 + (EV_2)^2$$
$$D_2 = (EH_2)^2 + (EV_1)^2$$

On choisira donc de passer par le point dont la distance par rapport au "centre d'articulation" est petite.

Les calculs précedemment exposés consistent à effectuer une comparaison entre deux sommes de deux nombres élevés au carré. On peut cependant effectuer des calculs plus simples (pas d'élévation au carré) qui donnent aussi le résultat escompté au niveau du choix du premier mouvement à effectuer en premier. Ce choix sera alors déterminé de la façon suivante :

Si $(EH_1 + EV_2) > (EH_2 + EV_1)$ on exécute le mouvement horizontal en premier.

Si $(EH_1 + EV_2) < (EH_2 = EV_1)$ on exécute le mouvement vertical en premier.

De même que dans le calcul non simplifié, dans le cas où $(EH_1 + EV_2) = (EH_2 + EV_1)$ il sera possible de rejoindre le point par chacune des deux trajectoires possibles. Le choix se fera donc arbitrairement.

## Revendications

1. Procédé de positionnement automatique avec rappel de mémoire d'une surface réfléchissante (4) montée sur une rotule (22, 23) autorisant avec la même amplitude son déplacement angulaire par rapport à une position centrale, autour d'un premier axe de pivotement haut-bas (24) et d'un second axe de pivotement gauche-droite (25), caractérisé en ce que la surface réfléchissante (4) est couplée à des capteurs de position haut-bas et gauche-droite (8, 12), dont les tensions de sortie sont exploitées en vue d'imposer une trajectoire à un point de référence M, fixe par rapport à la surface réfléchissante (4), lors du positionnement automatique de celle-ci dans une position cible C, rappelée en mémoire.

2. Procédé de positionnement automatique selon la revendication 1 caractérisé en ce que le point de référence M se déplace de façon rectiligne lors du déplacement angulaire de la surface réfléchissante (4) autour du premier axe (24) et lors de son déplacement angulaire autour du second axe (25), si bien que ce point de référence M peut rejoindre géométriquement la position cible C en passant par deux points de passage différents B, D correspondant à la jonction orthogonale des segments, ces deux points de passage B, D définissant avec le point de départ A et la position cible d'arrivée C un rectangle A - B - C - D.

3. Procédé de positionnement automatique selon la revendication 2 caractérisé en ce que les coordonnées des deux points de passage possibles B, D sont calculées à partir des coordonnées de la position cible C et de la position de départ A du point de référence M.

4. Procédé de positionnement automatique selon la revendication 2 ou 3, caractérisé en ce que le point de référence M est situé sur la normale au centre de la surface réfléchissante (4), et peut se déplacer à l'intérieur d'un cercle (26) délimitant l'ensemble des positions de la surface réfléchissante (4) autorisées par la rotule (22, 23).

5. Procédé de positionnement automatique selon la revendication 2, caractérisé en ce que la trajectoire imposée au point de référence M de la normale au centre de la surface réfléchissant 4 correspond au point de passage B ou D le plus proche du centre O du cercle (26).

6. Procédé de positionnement automatique selon la revendication 5 caractérisé en ce que si le point de passage B ou D le plus proche du centre O du cercle (26) a la même coordonnée haut-bas y que le point de départ A, la surface réfléchissante (4) est déplacée en premier lieu autour de l'axe de pivotement droite-gauche (25) jusqu'à ce que le point de référence atteigne la coordonnée droite-gauche de la position cible C.

7. Procédé de positionnement automatique selon la revendication 5 en ce que, si le point de passage B ou D le plus proche du centre O du cercle (26) n'a pas la même coordonnée haut-bas y que le point de départ A, la surface réfléchissante est déplacée en premier lieu autour de l'axe du pivotement haut-bas (24), jusqu'à ce que le point de référence M atteigne la coordonnée haut-bas de la position cible C.

8. Dispositif de positionnement automatique avec rappel de mémoire d'une surface réfléchissante (4) montée sur une rotule (23) autorisant avec la même amplitude son déplacement autour de deux axes orthogonaux, comportant un premier moteur (5) entraînant par l'intermédiaire d'un premier pignon (6) une première crémaillère (7), dont le déplacement longitudinal fait tourner la surface réfléchissante (4) autour du premier axe (24), et un second moteur (9) entraînant par l'intermédiaire d'un second pignon (10) une seconde crémaillère (11) dont le déplacement longitudinal fait tourner la surface réfléchissante (4) autour du second axe (25) comportant un premier capteur de position (8) déterminant la position de la surface réfléchissante autour du premier axe, et un second capteur de position (9) déterminant la position de la surface réfléchissante autour du second axe, caractérisé en ce que les tensions de sortie du premier et du second capteur sont exploitées pour déterminer quel moteur (5, 9) doit être actionné en premier lors du positionnement automatique de la surface réfléchissante (4) vers une position rappelée en mémoire.

9. Dispositif de positionnement automatique selon la revendication 8 caractérisé en ce que la première et la seconde crémaillère (7, 11) sont parallèles, chacune étant orthogonale à l'axe autour duquel elle fait tourner la surface réfléchissante, et portent à une de leurs extrémités une tête d'articulation sphérique (18, 19) sur laquelle est engagée par clipsage une calotte (20, 21) solidaire de la surface réfléchissante 4.

10. Dispositif de positionnement automatique selon la revendication 8 caractérisé en ce que le premier et le second capteur (8, 12) sont branchés sur une unité d'acquisition de valeurs de paramètres (29), et délivrent des signaux à la mémoire de position de l'unité centrale (17), en ce que des boutons de manoeuvre (27a-27b), des boutons de mémorisation (28a) et des boutons de rappel de mémoire (28b, 28c, 28d) fournissent des instructions à l'unité centrale (17) et en ce que l'unité centrale (17) délivre à un bloc de commande en puissance (30) des signaux d'excitation du premier (5) et du second moteur (9) pour effectuer le positionnement de la surface réfléchissante (4) autour du premier et du second axe (24 - 25), dans un ordre déterminé.

11. Dispositif de positionnement automatique selon l'une quelconque des revendications 8 à 10, caractérisé en ce que la surface réfléchissante (4) est un miroir de rétroviseur (1).

FIG.1

FIG.2

FIG.3

FIG.4

FIG.5

EP 0 490 734 A1

Office européen
des brevets

**RAPPORT DE RECHERCHE EUROPEENNE**

Numero de la demande

EP    91 40 3299

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0 278 310 (COM.MER ITALIA S.P.A.)<br>* le document en entier * | 1 | B60R1/06<br>G05B19/405 |
| A |  | 8-11 | H01Q3/08 |
|  | --- |  |  |
| Y | PATENT ABSTRACTS OF JAPAN<br>vol. 9, no. 60 (M-364)(1783) 16 Mars 1985<br>& JP-A-59 195 451 ( NISSAN JIDOSHA K.K. ) 6 Novembre 1984<br>* abrégé * | 1 |  |
| A |  | 2 |  |
|  | --- |  |  |
| A | US-A-4 953 422 (CHAPMAN ET AL.)<br>* abrégé * | 1 |  |
|  | --- |  |  |
| A | US-A-4 937 759 (VOLD)<br>* abrégé *<br>* colonne 28, ligne 9 - ligne 45 * | 1 |  |
|  | --- |  |  |
| A | PATENT ABSTRACTS OF JAPAN<br>vol. 10, no. 348 (P-519)(2404) 22 Novembre 1986<br>& JP-A-61 147 307 ( TOYODA MACH WORKS LTD ) 5 Juillet 1986<br>* abrégé * | 1 | **DOMAINES TECHNIQUES RECHERCHES (Int. Cl.5 )**<br><br>B60R<br>G05B<br>H01Q |
|  | ----- |  |  |

Le présent rapport a été établi pour toutes les revendications

| Lieu de la recherche | Date d'achèvement de la recherche | Examinateur |
|---|---|---|
| LA HAYE | 20 MARS 1992 | DUBOIS B.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P0402)